# NOUVEAU FASCICULE DE BREVET EUROPEEN

(11) **EP 3 441 211 B2**
(45) Date de publication et mention de la décision concernant l'opposition: **12.11.2025**
(45) Mention de la délivrance du brevet: 29.04.2020
(21) Numéro de dépôt: 18305982.3
(22) Date de dépôt: 18.07.2018
(51) Int. Cl.: B29C 49/24, B29C 49/78, B29C 49/06, B29C 49/36, B29C 49/64

(54) **PROCEDE DE PRODUCTION D'UNE SUCCESSION DE RECIPIENTS COMPRENANT UNE ETAPE DE MARQUAGE DES RECIPIENTS**
HERSTELLUNGSVERFAHREN EINER FOLGE VON BEHÄLTERN, DAS EINE MARKIERETAPPE DIESER BEHÄLTER UMFASST
METHOD FOR PRODUCING A SERIES OF CONTAINERS COMPRISING A STEP OF MARKING THE CONTAINERS

(30) Priorité: 31.07.2017 FR 1757283
(43) Date de publication de la demande: 13.02.2019
(73) Titulaire: Sidel Participations, 76930 Octeville-sur-Mer (FR)
(72) Inventeur: FEILLOLEY, Franck, 76930 Octeville-sur-mer (FR); DANEL, Laurent, 76930 Octeville-sur-mer (FR); LINGLET, Stéphane, 76930 Octeville-sur-mer (FR); DUCLOS, Yves-Alban, 76930 Octeville-sur-mer (FR); MARAN, Christophe, 76930 Octeville-sur-mer (FR); MOULIN, Sébastien, 76930 Octeville-sur-mer (FR); LECANU, Cyrille, 76930 Octeville-sur-mer (FR); GARIOU, David, 76930 Octeville-sur-mer (FR)
(74) Mandataire: Sidel Group

(56) Documents cités:
- EP-A1- 1 471 008
- EP-A1- 1 561 689
- EP-A1- 2 439 048
- EP-B1- 2 077 919
- WO-A1-2013/113382
- WO-A1-2017/133815
- DE-A1- 102008 029 168
- DE-A1- 102008 029 168
- DE-A1- 102009 037 172
- DE-A1- 102010 022 405
- DE-A1- 102012 112 297
- DE-A1- 102012 206 081
- DE-U1- 202013 011 695
- JP-A- 2013 242 884
- US-A1- 2002 099 467
- US-A1- 2010 102 032
- US-A1- 2012 085 071
- US-A1- 2014 103 064

## Description

L'invention concerne le domaine de la production de récipients (notamment bouteilles, flacons) par formage à partir de préformes en matière plastique, telle que par exemple le polyéthylène téréphtalate (PET), les récipients étant remplis par un produit de remplissage. Les documents US2012/085071 A1, DE102008029168A1 et US2014/103064A1 décrivent des procédés et des installations faisant partie de l'arrière plan technologique.

Dans une telle installation, on combine le formage des récipients à partir de préformes et une série de traitement de ces récipients dans la continuité de la réalisation de récipients, tels que le remplissage, le bouchage. Il est aussi connu d'étiqueter et/ou de marquer le récipient en ligne.

Au cours de l'utilisation de l'installation de production, certains dysfonctionnements sont susceptibles de se produire et par exemple aboutir à des récipients mal formés, à des récipients détruits ou à des fuites lors du remplissage. Pour détecter les récipients défectueux, il est connu de prévoir différents capteurs dans l'installation, par exemple des caméras ou autres, et il est prévu d'évacuer les récipients non conformes de l'installation afin qu'ils ne soient pas remplis par le produit de remplissage.

Cependant, de tels moyens ne permettent pas de remonter à la cause du dysfonctionnement, ni de détecter d'autres problèmes qui peuvent survenir dans l'installation, par exemple au cours du remplissage ou dans des unités particulières de l'installation. En effet, les capteurs permettent de détecter un récipient défectueux mais l'analyse de la cause de ce défaut reste difficile.

Pour pallier cet inconvénient, on peut par exemple prévoir que le récipient soit marqué par chaque élément de l'installation permettant son formage, son remplissage et tous les traitements qu'il est susceptible de subir afin de permettre de tracer le cheminement du récipient dans l'installation. Cependant, la multiplicité des marquages complexifie l'installation et est susceptible de fragiliser le récipient en augmentant les zones marquées du récipient. En outre, même en ajoutant plusieurs marquages, il n'est pas possible d'identifier de façon unique chaque récipient, car plusieurs récipients passant par les mêmes éléments de l'installation auront un marquage identique.

L'invention concerne en particulier les installations de production de récipients qui assurent une succession de traitements sur chaque récipient et qui tiennent individuellement chaque récipient tout au long du parcours de traitement du récipient dans l'installation de production. De telles installation présentent un système de contrôle susceptible d'enregistrer en temps réel les valeurs mesurées ou détectées par un grand nombre de capteurs de la machine, d'enregistrer le début d'un grand nombre d'opérations effectué sur le récipient et de pouvoir mettre en regards de chaque récipient un nombre important de données machine concernant chaque récipient individuel.

Cependant, l'analyse d'un défaut sur un récipient peut nécessiter de faire un test sur ce récipient après que celui-ci ait quitté l'installation. Par exemple, lorsque l'installation comprend le dépôt d'une couche sur une surface du récipient, il peut être utile de procéder à un test manuel long, ne pouvant pas être effectué en ligne à la cadence de production. Parfois le test pertinent pour détecter une origine d'un défaut peut être un test détruisant le récipient. La difficulté vient de ce que, une fois que le récipient a quitté l'installation, le lien avec le système de control de l'installation est rompu. Il est difficile de faire le lien entre le résultat d'un test « hors-ligne » et l'historique de ce que l'installation de production a fait sur ce récipient particulier.

L'un des buts de l'invention est de proposer un procédé de production d'une succession de récipient, permettant d'élargir l'analyse des défauts et/ou des dérives susceptibles de se produire dans une installation de production de récipient.

A cet effet, l'invention concerne un procédé de production d'une succession de récipients à partir d'une succession de préformes en matières plastiques chauffées dans une installation de production de récipients comprenant au moins une station de chauffage de la succession de préformes, une machine de formage comprenant une pluralité de stations de formage, une ou plusieurs machines de traitement comprenant chacune une pluralité de stations de traitement, le procédé comprenant les étapes suivantes :
- circulation de la succession de préformes dans la station de chauffage jusqu'à la machine de formage au cours de laquelle chaque préforme est tenue individuellement et chauffée à une température de référence,
- formage de la succession de préformes dans la machine de formage, chaque préforme chauffée étant placée dans une station de formage dans laquelle ladite préforme est formée en un récipient, de sorte que ladite succession de préformes est formée en une succession de récipients individuels,
- traitement de la succession de récipients individuels dans la machine de traitement, chaque récipient individuel étant placé dans une station de traitement,
- circulation de chaque récipient tenu individuellement entre la machine de formage et la ou les machines de traitement,
le procédé comprenant une phase d'identification individuelle de chaque récipient produit durant une période prédéterminée de suivi, phase d'identification individuelle comprenant une étape de marquage au cours de laquelle chaque récipient individuel produit au cours de ladite période de suivi reçoit un marquage propre audit récipient, permettant d'identifier individuellement ledit récipient en le distinguant de tous les autres récipients produit par l'installation de production durant ladite période de suivi.
Selon l'invention, le marquage propre au récipient à identifier comprend une information de poste relative à au moins l'un des éléments ayant tenu, ou devant tenir ledit récipient à identifier lors de la production du récipient à identifier, et une information d'horodatage relative au moment où ledit récipient à identifier est marqué.

Grâce à l'identification individuelle propre à chaque récipient produit, il est possible de faire le lien entre des mesures faite à postériori après la production du récipient et l'ensemble des données machine relative à la production de ce récipient particulier. Cela permet d'élargir les capacités d'analyse des défauts et/ou de maintenance prédictive de l'installation.

Les stations de formage et de traitement tiennent la préforme ou le récipient qui y est placé.
Ainsi, l'installation de production de récipient assure la tenue individuelle de la préforme ou du récipient tout au long du parcours de production de ce récipient.

La période prédéterminée de suivi peut être contractuelle et couvrir l'ensemble de la vie de l'installation de production. Ella peut alternativement être choisie par l'opérateur et viser une phase d'investigation particulière de l'installation.

Grâce au fait que préformes et récipients sont tenus individuellement durant tout leur passages dans l'installation de production, il est possible de connaître à chaque instant la position de chaque préforme ou récipient dans l'installation et ainsi d'identifier les différentes stations par lesquelles une préforme puis le récipient formé à partir de cette préforme passent. Ainsi, en une seule étape de marquage, il est possible d'ajouter au marquage des informations sur les stations par lesquelles le récipient est passé. Ainsi, on ne fragilise pas le récipient en multipliant les étapes et les zones de marquage. En outre, grâce aux informations d'horodatage sur l'instant du marquage, il est possible d'identifier de façon unique chaque récipient. En effet, les marquages de deux récipients passés par les mêmes stations de l'installation de production se distingueront l'un de l'autre par l'information sur le moment auquel le marquage a eu lieu.

Avantageusement, l'information d'horodatage comprend la date et l'heure à la seconde près auxquelles le marquage du récipient a lieu.

Les inventeurs ont constaté qu'une information d'horodatage à la seconde près est suffisante pour identifier chaque récipient de façon unique. En effet, les cycles de production de l'installation sont tels que deux récipients ne peuvent pas passer par les mêmes stations dans une même seconde. Ainsi, l'horodatage à la seconde près permet de distinguer deux récipients l'un de l'autre, même si ceux-ci sont passées par les mêmes stations.

Selon un mode de réalisation, le marquage propre au récipient à identifier comprend en outre un codage propre à l'installation ayant produit ledit récipient et/ou un codage de la période de suivi. Un tel mode de réalisation peut permettre d'identifier un récipient produit selon ce procédé en le distinguant de tous les autres, éventuellement produit par une autre machine. Ainsi le marquage peut servir de base pour détecter des responsabilités.

Selon une autre caractéristique du procédé selon l'invention, l'une desdites machines de traitement est une machine d'application de ladite couche barrière sur la paroi interne du récipient comprenant une pluralité de stations d'application, le procédé comprenant une étape d'application d'une couche barrière à la succession de récipients, chaque récipient étant placé dans une station d'application identifiée dans laquelle une couche barrière est appliquée sur la paroi interne dudit récipient, l'étape de marquage du récipient à identifier comprenant le marquage d'une information relative à la station d'application identifiée dans laquelle une couche barrière a été ou sera appliquée audit récipient.

L'identification de la station ayant réalisée l'application de la couche barrière est particulièrement utile pour le contrôle hors-ligne de perméabilité. En effet, la couche barrière permet d'améliorer l'imperméabilité au gaz du récipient, par exemple pour empêcher le dioxyde de carbone (CO₂) d'échapper du récipient par la paroi de celui-ci lorsque le récipient contient un produit carbonaté ou pour empêcher l'oxydation par l'air ambiant d'un produit contenu dans le récipient. Afin d'évaluer la qualité de la couche barrière, il est nécessaire d'effectuer des tests de perméabilité en dehors de l'installation et il est donc utile d'identifier de façon précise la station d'application qui a réalisé la couche barrière sur le récipient testé.

Selon d'autres caractéristiques du procédé selon l'invention :
- le procédé comprend une autre étape de traitement qui est une étape de remplissage de chaque récipient produit, l'une des machines de traitement correspondante étant une machine de remplissage, l'étape de marquage du récipient à identifier se produisant entre l'étape d'application d'une couche barrière et l'étape de remplissage.
- l'installation comprend une unité de bouchage comprenant une pluralité de stations de bouchage; procédé dans lequel, au cours de l'étape de bouchage de la succession de récipients, chaque récipient est placé dans une station de bouchage identifiée dans laquelle un bouchon est fixé sur ledit récipient, l'étape de marquage du récipient à identifier comprenant le marquage d'une information relative à la station de bouchage identifiée dans laquelle un bouchon a été fixé sur ledit récipient.
l'étape de marquage comprend le marquage d'une information de produit relative au produit de remplissage introduit dans le récipient au cours de l'étape de remplissage.
l'installation de production comprend une unité d'étiquetage ayant une pluralité de stations d'étiquetage ; procédé dans lequel, au cours de l'étape d'étiquetage, chaque récipient est placé dans une station d'étiquetage identifiée dans laquelle une étiquette est fixée sur ledit récipient, l'étape de marquage du récipient à identifier comprenant le marquage d'une information relative à la station d'étiquetage identifiée dans laquelle une étiquette a été fixée sur ledit récipient.

Comme indiqué précédemment, le transport positif des préformes et des récipients permet d'identifier facilement chacune des stations par lesquels une préforme puis le récipient, obtenu à partir de cette préforme, passent. Ainsi, il est possible d'ajouter lors du marquage les informations relatives à ces stations afin d'améliorer la traçabilité du récipient.

L'étape de marquage peut également servir à marquer des informations usuelles sur le produit de remplissage contenu dans le récipient, telles que, par exemple, une date de péremption ou autre. Ainsi, une unique étape de marquage permet d'imprimer des informations relatives à la traçabilité du récipient et relatives au produit contenu dans le récipient.

Selon une autre caractéristique du procédé selon l'invention, le marquage de chaque récipient est effectué dans une zone unique dudit récipient, les informations relatives aux stations identifiées et d'horodatage étant placées les unes adjacentes aux autres dans ladite zone unique.

En prévoyant une zone de marquage unique, on limite les risques d'endommagement des récipients et on simplifie la lecture des informations marquées sur le récipient.

Selon un autre aspect, l'invention concerne un procédé de commande d'une installation de production d'une succession de récipients à partir d'une succession de préformes en matières plastiques comprenant :
une première étape d'acquisition de données machine mettant en oeuvre le procédé précité, dans laquelle pour chaque récipient individuel produit, la console de commande mémorise d'une part le marquage propre audit récipient et d'autre part une série de données spécifiques relatives aux stations de formage, et/ou de traitement, et/ou aux éléments ayant tenus ledit récipient au cours de sa production, et/ou une série de données générales relatives au fonctionnement de l'installation lors de la production dudit récipient,
une deuxième étape d'acquisition de données récipient, au cours de laquelle, on mesure une ou plusieurs grandeurs physiques de chacun des récipients identifié individuellement au cours de la première étape,
une troisième étape de constitution d'une base de données mixte mettant en correspondance pour chaque récipient identifié individuellement lors de la première étape, d'une part la ou les mesures de la deuxième étape, et la ou les séries de données acquises lors de la première étape.

Selon une mode de réalisation, le procédé de commande comprend une étape de diagnostic, au cours de laquelle on compare les données récipient par rapport à des valeurs cibles préenregistrées correspondants aux grandeurs mesurées, et on détermine un dysfonctionnement avéré ou imminent sur l'une ou plusieurs des stations de formage et/ou de traitement et/ou d'éléments de tenu de l'installation. La détection d'un défaut imminent peut être détecté en mesurant une dérive d'une données récipient et/ou une donnée machine et en détectant que cette dérive dépasse un seuil préenregistré.

Selon un autre mode de réalisation, le procédé de commande comprend une étape d'analyse de la base de données mixte, au cours de laquelle on établit au moins une loi de corrélation entre des données récipient et des données machine, et une étape de correction dans laquelle on calcule d'après la ou les lois de corrélation un ou plusieurs paramètres machine ajustés susceptibles lors d'un prochain cycle de production de produire des récipients dont une ou plusieurs grandeurs physiques seront plus proches de la ou les cibles préenregistrées, que lors de la première étape.

Selon un autre aspect, cette description concerne une installation de production qui peut être utilisée pour effectuer un procédé de production selon l'invention, d'une succession de récipients à partir d'une succession de préformes en matières plastiques chauffées permettant la mise en œuvre d'un procédé de production précité, ladite installation comprenant :
- une station de chauffage de la succession de préformes permettant de tenir et de chauffer chacune desdites préformes à une température de référence,
- une machine de formage de la succession de préformes en une succession de récipients, ladite machine de formage comprenant une pluralité de stations de formage identifiées, chaque station de formage recevant une préforme et formant ladite préforme en un récipient,
- au moins une machine de traitement de la succession de récipients, ladite machine de traitement comprenant une pluralité de stations de traitement du récipient produit,
- un dispositif de transport positif tenant individuellement chaque récipient entre la machine de formage et la ou les machines de traitement,
- une unité de marquage appliquant un marquage sur chacun des récipients de la succession de récipients, et une console de contrôle reliée à l'unité de marquage et générant le marquage à appliquer,
ladite installation de production étant caractérisée en ce que la console de contrôle comprend un logiciel conçu pour que ledit marquage soit propre audit récipient et permette d'identifier individuellement chaque récipient produit durant une période prédéterminée de suivi en le distinguant de tous les autres récipients produit par l'installation de production durant ladite période de suivi.

Selon un mode de réalisation, chaque préforme circulant dans la station de chauffage est tenue par un élément de préhension, chaque récipient individuel en cours de formage est tenu par la station de formage qui le forme, chaque récipients individuel en cours de traitement est tenu par la station de traitement qui le traite, chaque récipients individuel circulant entre la machine de formage et la ou les machines de traitement est tenu par un élément de préhension du dispositif de transport positif, lesdits éléments de préhension, la station de formage ou la station de traitement de la ou de chaque machine de traitement constituent des éléments ayant tenu, ou devant tenir le récipient à identifier, dont une information est enregistrée dans la console de commande associé au marquage propre au récipient à identifier.

L'invention est particulièrement avantageuse dans le cas où les stations des différentes machines sont « appairées », c'est-à-dire que deux stations de deux machines différentes fonctionnent en coopération pour traiter une préforme et le récipient issu de la préforme. En d'autres termes, les récipients formés à partir de préformes étant passées par une station de formage particulière de la machine de formage seront toujours remplis par la même station de remplissage de la machine de remplissage. Ainsi, on connaît le trajet suivi par une préforme et un récipient issu de la préforme dès que l'on connaît la station de formage par laquelle la préforme passe. Dès lors, le marquage est simplifié puisque les informations marquées sur deux récipients passés par les mêmes stations sont identiques en dehors des informations d'horodatage.

Selon un mode de réalisation, l'une des machines de traitement est une machine de remplissage du récipient produit par l'installation, la machine de remplissage comprenant une pluralité de station de remplissage, et dans laquelle chaque station de remplissage de la machine de remplissage est associée à une station de formage identifiée de la machine de formage de sorte que pour chaque station de remplissage, la console de contrôle sais de quelle station de formage provient systématiquement le récipient que la station de remplissage est en train de remplir.

D'autres aspects et avantages de l'invention apparaîtront à la lecture de la description qui suit, donnée à titre d'exemple et faite en référence aux dessins annexés, dans lesquels :
- la Fig. 1 est une représentation schématique de dessus d'une installation de production qui peut être utilisée pour effectuer un procédé de production selon l'invention,
- la Fig. 2 est une représentation schématique d'un récipient obtenu après l'étape de marquage du procédé de production selon l'invention,
- la Fig. 3 est une représentation des informations marquées sur un récipient après l'étape de marquage du procédé de production selon l'invention, et
- Les figures 4 et 5 illustrent deux exemples de marquage, un QR code (Figure 4), et un data-matrix (figure 5).
En référence à la Fig. 1, on décrit une installation de production **1** d'une succession de récipients **2** à partir d'une succession de préformes **4** en matière plastique.

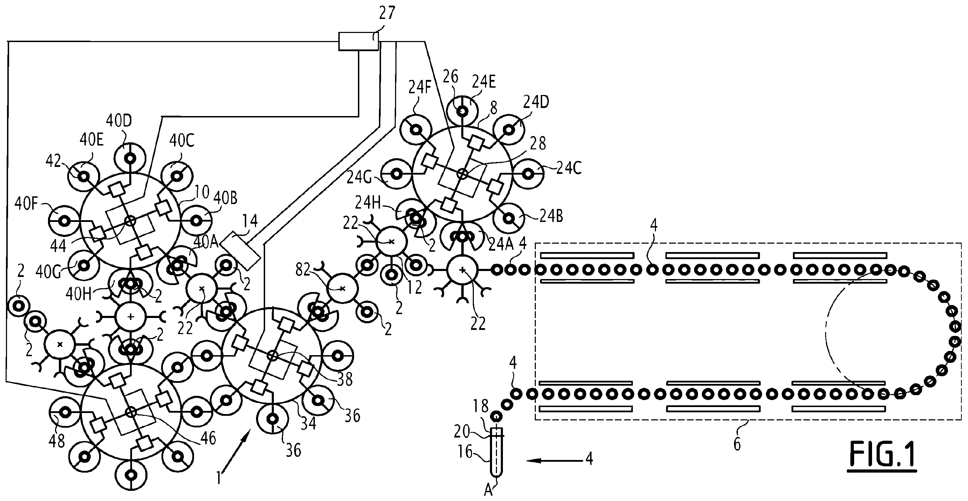

En référence à la Fig. 1, on décrit une installation de production **1** d'une succession de récipients **2** à partir d'une succession de préformes **4** en matière plastique.

L'installation de production **1** comprend au moins une station de chauffage **6**, une machine de formage **8,** une machine de remplissage **10,** un dispositif de transport **12** et une unité de marquage **14.**

Chaque préforme 4 comprend un corps **16,** un col **18** et une bague **20.** Le corps 6 présente par exemple la forme d'un tube à essai avec un fond fermé et définit un volume interne s'étendant selon un axe principal **A.** Le col 8 s'étend dans la continuité du corps 6 à l'opposé du fond et forme une ouverture supérieure par laquelle un fluide peut être introduit dans le volume interne de la préforme, comme cela sera décrit ultérieurement. Le col 8 de la préforme présente par exemple la forme définitive qu 'il aura dans le récipient 2 formé à partir de la préforme 4 et comprend, par exemple, un filetage sur sa paroi externe pour permettre la fixation d'un bouchon sur le récipient. La bague 10 s'étend entre le corps 6 et le col 8 radialement vers l'extérieur et forme par exemple une bague de transport par laquelle la préforme peut être saisie et transportée, comme cela sera décrit ultérieurement. La forme de préforme donnée ci-dessus ne l'est qu'à titre d'exemple et d'autres formes pourraient être envisagées, tant que celles-ci sont appropriées pour former un récipient par introduction d'un fluide dans la préforme. Ainsi, à titre d'exemple, la préforme pourrait présenter un col lisse, être dépourvue de bague, et/ou avoir d'autres variantes de formes selon divers modèles de préforme susceptibles d'être utilisés dans l'installation de production 1. La matière plastique de la préforme est par exemple du polyéthylène téréphtalate (PET). En variante, la matière plastique pourrait être différente du PET, tant que cette matière est susceptible d'être rendue malléable et déformable pour permettre la réalisation d'un récipient par introduction d'un fluide dans la préforme.

La station de chauffage 6 est agencée pour chauffer chaque préforme 4 à une température de référence à laquelle la préforme 4 est dans un état malléable et peut être formée en un récipient. La température de référence est comprise entre la température de transition vitreuse et la température de cristallisation du matériau de la préforme 4. La station de chauffage 6 comprend par exemple une pluralité d'éléments de chauffage répartis dans la station de chauffage 6 selon un trajet et agencés pour chauffer la succession de préformes 4 se déplaçant devant les éléments de chauffage grâce au dispositif de transport 12. Les éléments de chauffage sont par exemple en outre répartis selon une direction parallèle à l'axe des préformes de sorte à permettre de chauffer l'ensemble du corps 6 des préformes 4. Une telle station de chauffage 6, ou four à défilement, étant connue en soi, elle ne sera pas décrite plus en détail ici.

En sortie de la station de chauffage 6, les préformes chauffées sont déplacées jusqu'à la machine de formage 8 par le dispositif de transport 12.

Le dispositif de transport 12 est par exemple formé par un convoyeur dans la station de chauffage 6. En sortie de la station de chauffage 6, le dispositif de transport 12 est par exemple formé par une pluralité de roues de transfert **22,** mobiles en rotation, pourvues chacune en périphérie d'une pluralité d'éléments de préhension. Chaque élément de préhension, par exemple du type pince ou autre, est agencé pour saisir une préforme 4 de la succession de préforme et la transporter jusqu'à la roue suivante où un élément de préhension de la roue suivante prélève la préforme et ainsi de suite jusqu'à la machine de formage 8. Le nombre de roues peut varier d'une installation de production à une autre et dépend de l'agencement de l'installation de production. Une seule roue pourrait être prévue entre la sortie de la station de chauffage 6 et la machine de formage 8, comme représenté sur la Fig. 1.

Le dispositif de transport 12 est un dispositif de transport positif, c'est-à-dire que le dispositif de transport 12 est agencé pour que la position d'une préforme 4 soit toujours connue dans l'installation de production 1. Cela peut être obtenu par exemple en entraînant une ou plusieurs roues en rotation au moyen d'un moteur synchrone et en asservissant la rotation des autres roues à la roue entraînée en rotation par le moteur synchrone, par exemple au moyen de courroies. Une autre solution consiste à entraîner en rotation chaque roue au moyen d'un moteur synchrone. En effet, la position angulaire d'un moteur synchrone est connue à tout instant, et il est donc possible d'en déduire la position d'une préforme 4 dans l'installation de production grâce à la connaissance de la position angulaire des roues à chaque instant.

La machine de formage 8 comprend une pluralité de stations de formage **24** agencées chacune pour recevoir et former une préforme 4 de la succession de préformes 4 en un récipient. A cet effet, chaque station de formage 24 comprend un moule **26** et un dispositif d'injection d'un fluide de formage. Le moule 26 comprend une cavité de moulage présentant la forme du récipient à produire et agencée pour recevoir le corps 6 de la préforme. Le dispositif d'injection est agencé pour injecter un fluide de formage sous pression dans le volume interne de la préforme 4 par l'ouverture supérieure de celle-ci afin que le corps 6 de la préforme acquière la forme de la cavité de moulage. Le fluide de formage est par exemple un gaz, par exemple de l'air sous pression. Chaque station de formage 24 peut en outre comprendre une tige d'étirage agencée pour exercer un appui sur le fond de la préforme 6 afin de l'étendre selon son axe.

Chaque station de formage 24 est identifiée, c'est-à-dire qu'elle est référencée dans une console de contrôle **27** de l'installation. Ainsi, à titre d'exemple, la machine de formage 8 comprend dix-huit stations de formage. Pour des raisons de simplicité et pour faciliter la lecture de la figure, seules cinq stations de formage 24A, 24B, 24C, 24D et 24E ont été représentées. Les stations de formage 24 sont portées par une roue de formage **28,** ou carrousel, mobile en rotation autour d'un axe de rotation parallèle aux axes de rotation des roues de transfert 22. Les stations de formage 24 sont portées sur la périphérie de la roue de formage 28 de sorte qu'elles se déplacent le long d'un trajet circulaire défini par la roue de formage 28 entre un point d'entrée **30** et un point de sortie **32.** Au point d'entrée, le moule est ouvert et est agencé pour recevoir une préforme 4 de la roue de transfert 22, puis le moule 26 est fermé, le dispositif d'injection est placé en communication fluidique avec le volume interne de la préforme et le fluide de formage est injecté dans la préforme au cours du déplacement de la station de formage entre le point d'entrée 30 et le point de sortie 32. Au point de sortie 32, le moule 26 est ouvert et le récipient formé est extrait de la station de formage 24. La structure et le fonctionnement de telles stations de formage 24 et, plus généralement, de la machine de formage 8 sont connus en tant que tels et ne seront pas décrit plus en détail ici.

Il convient de noter que, dans la machine de formage 8, le dispositif de transport 12 est formé par la roue de formage 28 et les moules eux-mêmes qui transportent les préformes et les récipients du point d'entrée 30 au point de sortie 32. La roue de formage 28 est ainsi entraînée de façon à connaître la position des stations de formage 24 à tout instant, par exemple en entraînant la roue de formage 28 au moyen d'un moteur synchrone. Par conséquent, l'installation permet de savoir dans quelle station de formage 24 une préforme 4 est placée et formée en un récipient. La console de contrôle 27 enregistre ainsi dans quelle station de formage 24A, 24B,..., 24E une préforme particulière passe.

Au point de sortie 32 de la machine de formage 8, le dispositif de transport 12 comprend une roue de transfert agencée pour prélever les récipients 2 en sortie de la machine de formage 8 et pour les transférer vers la machine de remplissage 10.

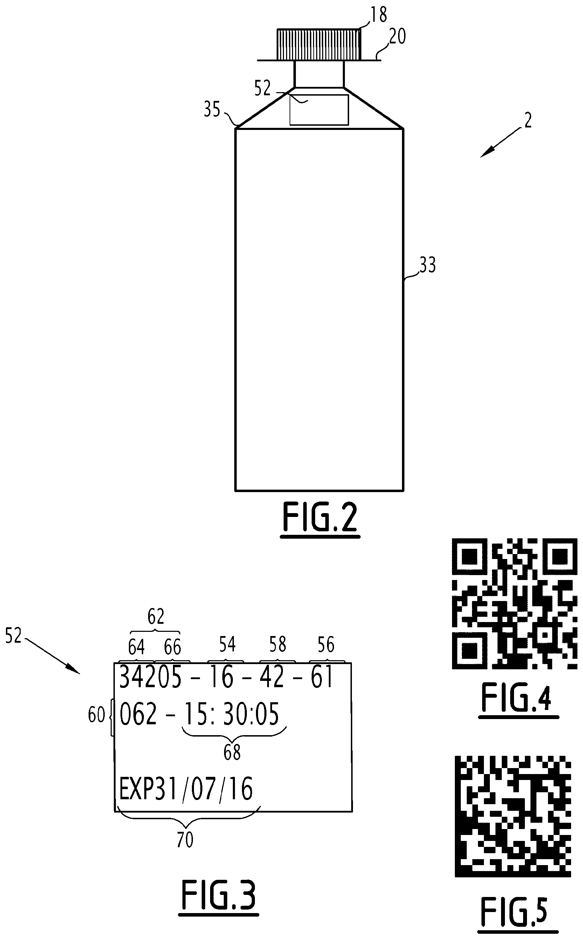

Les récipients obtenus, dont un exemple est représenté sur la Fig. 2, comprennent un corps **33** obtenu par formage du corps 16 de la préforme, un col 18 et une bague 20 identiques au col 18 et à la bague 20 de la préforme 4 puisque ceux-ci ne sont pas modifiés au cours du formage. Le corps 33 comprend par exemple un épaulement **35** formant la liaison entre le col 18 et une partie cylindrique du corps du récipient 2.

Selon des variantes de réalisation de l'installation de production, une ou plusieurs unités de traitement **34** de la succession de récipients 2 peuvent être prévus entre la machine de formage 8 et la machine de remplissage 10. Chaque unité de traitement **34** comprend une pluralité de stations de traitement **36** identifiées agencées pour appliquer un traitement particulier aux récipients 2 de la succession de récipients et par exemple portées par une roue de traitement **38.** Comme pour la machine de formage 8, dans l'unité de traitement 34, le dispositif de transport 12 est formé par la roue de traitement 38 et les stations de traitement 36 elles-mêmes et la roue de traitement 38 est agencée de façon à ce que l'on sache par quelle station de traitement identifiée 36 un récipient 2 de la succession de récipients est traité. La console de contrôle 27 enregistre ainsi dans quelle station de traitement un récipient particulier passe.

Le dispositif de transport 12 est en outre agencé pour transférer les récipients 2 entre les points de sortie d'une unité de traitement 34 au point d'entrée d'une autre unité de traitement 34 et jusqu'à la machine de remplissage 10. Il convient de noter que les roues de transfert 22 du dispositif de transfert peuvent également permettre de façon connue de modifier le pas entre deux préformes 4 ou récipients 2 successifs pour adapter ce pas au nombre de stations de traitement 36 prévues dans les unités de traitement 34. En effet, la machine de formage 8, la machine de remplissage 10 et les différentes unités de traitement 34 ne comprennent pas nécessairement le même nombre de stations, ce nombre de station dépendant de l'encombrement de celles-ci sur une roue et de la cadence de traitement des stations. En effet, les stations doivent permettre de réaliser le traitement en un tour de roue de traitement. Les éléments de préhension du dispositif de transport 12 sont par exemple adaptés pour transporter les récipients 2 par leur bague 20.

A titre d'exemple, l'unité de traitement 34 peut être une unité d'étiquetage permettant d'étiqueter chaque récipient 2, c'est-à-dire d'appliquer une étiquette sur chaque récipient. A cet effet, l'unité d'étiquetage comprend une pluralité de stations d'étiquetage identifiées agencées chacune pour recevoir un récipient et appliquer une étiquette sur ledit récipient. Les stations d'étiquetage sont par exemple portées par une roue d'étiquetage mobile en rotation et déplaçant de façon positive les récipients entre un point d'entrée et un point de sortie, les étiquettes étant appliquées sur les récipients au cours de ce déplacement.

En variante ou en complément, l'unité de traitement 34 ou une autre unité de traitement peut être une unité d'application d'une couche barrière sur la paroi interne des récipients 2. L'unité d'application comprend une pluralité de stations d'application agencées chacune pour appliquer une couche barrière sur la paroi interne d'un récipient 2 reçu dans ladite station d'application. Une telle station d'application est par exemple décrite dans le document FR-2 907 351. Les stations d'application sont par exemple portées par une roue d'application mobile en rotation et déplaçant de façon positive les récipients entre un point d'entrée et un point de sortie, les stations d'application appliquant la couche barrière sur les récipients au cours de ce déplacement.

En variante ou en complément, l'unité de traitement 34 ou une autre unité de traitement peut être une unité de nettoyage des récipients agencée pour injecter un produit de nettoyage dans les récipients.

Pour des raisons de simplicité et pour faciliter la lecture de la figure, seule une unité de traitement 34, comprenant cinq stations de traitement 36, a été représentée sur la Fig. 1. Il est cependant entendu que plusieurs unités de traitement 34, comprenant un nombre différents de stations de traitement, peuvent être prévues.

La machine de remplissage 10 comprend une pluralité de stations de remplissage **40** agencées chacune pour recevoir et remplir un récipient 2 de la succession de récipients 2. A cet effet, chaque station de remplissage 40 comprend un support de récipient **42** et un dispositif de remplissage du récipient. Le dispositif de remplissage est agencé pour introduire un produit de remplissage dans le volume interne du récipient 2 par l'ouverture supérieure de celui-ci. Le produit de remplissage est par exemple un liquide, qui peut être plus ou moins visqueux, carbonaté ou non, comprendre des morceaux solides. Le produit de remplissage peut être refroidi, à température ambiante ou chaud.

Chaque station de remplissage 40 est identifiée, c'est-à-dire qu'elle est référencée dans la console de contrôle 27 de l'installation. Ainsi, à titre d'exemple, la machine de remplissage 10 comprend cent-vingt stations de remplissage 40. Pour des raisons de simplicité et pour faciliter la lecture de la figure, seules cinq stations de remplissage 40A, 40B, 40C, 40D et 40E. Les stations de remplissage 40 sont portées par une roue de remplissage **44,** ou carrousel, mobile en rotation autour d'un axe de rotation parallèle aux axes de rotation des roues de transfert 22. Les stations de remplissage 40 sont portées sur la périphérie de la roue de remplissage 44 de sorte qu'elles se déplacent le long d'un trajet circulaire défini par la roue de remplissage 44 entre un point d'entrée et un point de sortie. En le point d'entrée et le point de sortie, le dispositif de remplissage est placé en regard du volume interne du récipient 2 et le produit de remplissage est introduit dans le récipient au cours du déplacement de la station de remplissage. Au point de sortie, le récipient rempli est extrait de la station de remplissage 40. La structure et le fonctionnement de telles stations de remplissage 40 et, plus généralement, de la machine de remplissage 10 sont connus en tant que tels et ne seront pas décrit plus en détail ici.

Il convient de noter que, dans la machine de remplissage 10, le dispositif de transport 12 est formé par la roue de remplissage 44 et les supports de récipient 42 eux-mêmes qui transportent les récipients du point d'entrée au point de sortie. La roue de remplissage 44 est ainsi entraînée de façon à connaître la position des stations de remplissage 40 à tout instant, par exemple en entraînant la roue de remplissage 44 au moyen d'un moteur synchrone. Par conséquent, l'installation permet de savoir dans quelle station de remplissage un récipient 2 est placé et rempli. La console de contrôle 27 enregistre ainsi dans quelle station de remplissage 40A, 40B,..., 40E un récipient particulier passe.

En sortie de la machine de remplissage 10, le dispositif de transport 12 comprend une ou plusieurs roues de transfert 22 transportant les récipients remplis à une unité de bouchage **46,** comprenant une pluralité de stations de bouchage **48** entraînées en rotation par une roue de bouchage **50,** chacune agencée pour appliquer un bouchon sur le col 18 d'un récipient 2 de la succession de récipients. Comme pour les autres unités et machines de l'installation, dans l'unité de bouchage, le dispositif de transport 12 est formé par la roue de bouchage 50 et les stations de bouchage 48 elles-mêmes et la roue de bouchage 50 est entraînée de façon à connaître la position des stations de bouchage 48 à tout instant, par exemple en entraînant la roue de bouchage 50 au moyen d'un moteur synchrone. Par conséquent, l'installation permet de savoir dans quelle station de bouchage un récipient 2 est placé. La console de contrôle 27 enregistre ainsi dans quelle station de bouchage 50 un récipient particulier passe.

En sortie de l'unité de bouchage 50, les récipients 2 sont retirés de l'installation de production 1.

Le dispositif de marquage 14 est agencé pour appliquer un marquage **52** (Figs. 2 et 3) sur chaque récipient 2 de la succession de récipients. Un tel marquage peut être réalisé par impression à l'encre, par l'application d'une étiquette, par gravure ou autre. Le dispositif de marquage 14 peut être placé entre la machine de formage 8 et la machine de remplissage 10, par exemple en regard d'une roue de transfert 22. Selon un exemple particulier, le dispositif de marquage 14 est placé entre l'unité d'application d'une couche barrière et la machine de remplissage 10. Selon un mode de réalisation, l'installation de production 1 comprend un unique dispositif de marquage 14. En variante, l'installation de production 1 comprend plusieurs dispositifs de marquage 14, agencés chacun pour marquer une partie des récipients, tandis qu'une autre partie est marquée par un autre dispositif de marquage. Dans tous les cas, chaque récipient 2 ne reçoit qu'un seul marquage 52 en une zone particulière et unique du récipient 2. Par exemple, le marquage 52 est réalisé sur une partie de l'épaulement 35 du récipient 2, comme représenté sur la Fig. 2. Un tel marquage unique et réalisé en une zone unique du récipient 2 permet de limiter les interactions du dispositif de marquage 14 avec la paroi du récipient 2 et ainsi les risques d'endommagement du récipient. La zone de marquage pourrait être prévue ailleurs que sur l'épaulement 35, par exemple sur une autre partie du corps 33 du récipient 2.

Le marquage 52 comprend une pluralité d'informations relatives au cheminement du récipient 2 et de la préforme dont il est issu dans l'installation de production 1. En effet, comme indiqué précédemment, le dispositif de transport 12 positif permet de connaître précisément ce cheminement et plus particulièrement de savoir par quelles stations une préforme particulière et le récipient particulier issu de cette préforme sont passés.

Ainsi, selon cette réalisation particulière de l'invention le marquage 52 comprend au moins une information de formage **54** relative à la station de formage identifiée 24 dans laquelle le récipient 2 marqué a été formé et une information de remplissage **56** relative à la station de remplissage identifiée 40 dans laquelle le récipient marqué a été rempli. L'information de formage 54 est par exemple un numéro de station de formage indiquant par quelle station de formage 24A,..., 24E le récipient a été formé et l'information de remplissage 56 est par exemple un numéro de station de remplissage indiquant par quelle station de remplissage 40A,..., 40E le récipient a été rempli. Sur la Fig. 3, un exemple de marquage 52 a été représenté, dans lequel le numéro de la station de formage 24A,..., 24E identifiée est 16 et dans lequel le numéro de la station de remplissage 40A,..., 40E identifiée est 61. Le cas échéant, le marquage 52 comprend en outre au moins une information de traitement **58** relative à une station de traitement identifiée 36 dans laquelle le récipient 2 a été traité. Ainsi, l'information de traitement 58 indique par exemple le numéro de la station d'étiquetage, de la station d'application ou de la station de nettoyage par laquelle le récipient 2 est passé. Sur la Fig. 3, le numéro de la station de traitement identifiée 36 est 42. Selon un mode de réalisation, le marquage 52 comprend autant d'informations de traitement 58 qu'il y a d'unités de traitement 34 entre la machine de formage 8 et la machine de remplissage 10. Le cas échéant, le marquage comprend en outre au moins une information de bouchage **60** relative à la station de bouchage identifiée 48 dans laquelle un bouchon a été fixé sur le récipient marqué 2. L'information 60 peut avantageusement être un numéro de chrono de la ligne de production 1. Ce numéro permet l'identification unique de la ligne de production. Sans ce numéro, il est possible (mais peu probable) que 2 bouteilles comporte la même identification, si elles ont été produites sur deux lignes différentes. Dans l'exemple de la Fig. 3, le numéro de station de bouchage identifiée 60 est 062. Il convient de noter que le dispositif de marquage 14 est capable de marquer des informations relatives à des stations dans lesquelles le récipient n'est pas encore passé au moment où le marquage est réalisé. En effet, grâce au dispositif de transport 12 positif, ces informations sont disponibles à tout instant avant même que le récipient passe par la station en question grâce à la synchronisation de l'installation de production 1 et des différentes machines et unités entre elles.

Selon l'invention, le marquage 52 comprend en outre une information d'horodatage **62** relative à l'instant auquel le récipient 2 est marqué. L'information d'horodatage 62 comprend par exemple le quantième du jour **64** dans l'année et le quantième de l'année **66** depuis laquelle l'installation de production a démarré et commencé la production de récipients. Dans l'exemple de la Fig. 3, le quantième du jour 64 est 342 et le quantième de l'année 66 est 05, ce qui signifie que le récipient a été marqué le 342^{ème} jour de la cinquième année de production de l'installation de production. L'information d'horodatage 62 comprend en outre l'heure **68** à laquelle le récipient 2 est marqué. Comme représenté sur la Fig. 3, l'heure 68 est marquée à la seconde près. En effet, une telle précision est suffisante pour garantir un marquage unique de chaque récipient, même lorsque les récipients sont passés par les mêmes stations. En effet, la rotation d'une roue d'une machine ou d'une unité de l'installation dure environ une seconde entre le point d'entrée et le point de sortie de cette roue. Ainsi, deux récipients 2 ne peuvent pas passer dans la même station dans une seule seconde.

Les différentes informations marquées peuvent être récupérées de la console de contrôle 27.

Selon un mode de réalisation, le marquage 52 peut en outre comprendre une ou plusieurs informations de produit 70, relatives au produit de remplissage introduit dans le récipient 2. Dans l'exemple de la Fig. 3, l'information de produit 70 est une date de péremption du produit de remplissage.

Les différentes informations marquées sur le produit sont placées adjacentes les unes aux autres, comme représenté sur la Fig. 3 de sorte à limiter la taille de la zone dans laquelle le marquage est effectué.

Le marquage indiqué ci-dessus permet donc d'identifier de façon unique chaque récipient 2 de la succession de récipients 2 ainsi que d'assurer une traçabilité complète du récipient dans l'installation. Une telle traçabilité permet d'identifier les éventuelles sources de dysfonctionnements dans l'installation même lorsqu'un défaut sur un récipient est constaté alors que ce récipient n'est plus dans l'installation de productions. En outre, l'information d'horodatage permet de lier les informations relatives aux stations aux conditions dans lesquelles l'installation de production fonctionnait au moment de la production d'un récipient (par exemple la température dans l'installation de production). En outre, comme indiqué précédemment, l'identification unique et la traçabilité de chaque récipient permet de faire le lien entre des tests effectués « en ligne », c'est-à-dire dans l'installation de production au cours du trajet du récipient dans les différentes stations, par exemple réalisés par des capteurs adéquats, et des tests effectués « hors ligne », c'est-à-dire en dehors de la chaîne de production des récipients 2.

Selon une variante, le marquage propre au récipient peut être un QR code ou un data-Matrix, tels qu'illustré respectivement aux Figures 4 et 5. Cela permet d'enregistrer une quantité importante de données de manière compacte. Ces informations sont alors lisible directement sur le récipient, sans devoir repasser par la basse de données machine.

L'invention est particulièrement avantageuse lorsqu'elle est appliquée à une installation de production dans laquelle la synchronisation des machines et des unités est réalisée de telle sorte que les stations de ces machines et unités sont dites « appairées ». Un tel appairage, connu en soi, permet de faire fonctionner les stations en association de sorte que des récipients passant par une station de formage 24 particulière de la machine de formage 8 passent toujours par les mêmes stations en aval de la machine de formage 8. Si, par exemple, un récipient est formé par la station de formage 24A, ce récipient sera rempli par la station de remplissage 40A. Un autre récipient formé par la station de formage 24A sera également rempli par la station de remplissage 40A. Il en va de même pour les stations de traitement du récipient qui seront toujours les mêmes pour les récipients formés par une même station de formage 24. En d'autres termes, les récipients formés par une station de formage 24 auront toujours le même trajet dans l'installation de production. Ainsi, les informations de formage 54, de remplissage 56, de traitement 58 marquées seront les mêmes pour les récipients passés par une même station de formage 24 et le marquage de ces récipients ne diffère que par l'information d'horodatage 62. Le marquage est donc simplifié et l'on identifie très rapidement le trajet suivi par un récipient dans l'installation de production, ce qui simplifie la détection de dysfonctionnements éventuels au cours de ce trajet.

Selon une variante, il est possible d'équiper l'installation de plusieurs unités de marquage. En particulier, il est possible d'avoir la station de marquage principale 14, telle que décrite précédemment, et une série d'unité de marquage périphérique, à au moins un, ou à plusieurs ou a tous les endroits où des récipients sont évacués de l'installation hors du chemin normal de production. Ainsi une codification supplémentaire peut être ajoutée relative à la cause des rejets des récipients qui sont éjectées de la production pour différente raison : éjection du récipient suite à un défaut de production ; éjection du récipient en cas d'arrêt immédiat de la production ; éjection des récipients restants dans les zones de convoyage, au redémarrage de la ligne de production, ou bien échantillonnage des récipients pour contrôle.

Tous ces récipients éjectés se retrouvent dans un même bac de récupération. Selon la raison de l'éjection de l'article, un code supplémentaire est ajouté juste avant la sortie de la bouteille du chemin normal de la production.

Un premier avantage de cette codification supplémentaire est de permettre un tri manuel des récipients dans le bac d'éjection, typiquement la séparation des récipients échantillonnés pour contrôle, et les récipients éjectés pour défaut de production.

Un deuxième avantage est la prévention par l'information du recyclage des mauvais récipients dans le circuit de production. Le code défaut ajouté sur la bouteille informe des tentatives de mise en circulation de produit non conforme.

## Revendications

1. Procédé de production d'une succession de récipients (2) à partir d'une succession de préformes (4) en matières plastiques chauffées dans une installation de production (1) de récipients comprenant au moins une station de chauffage (6) de la succession de préformes (4), une machine de formage (8) comprenant une pluralité de stations de formage (24), une ou plusieurs machines de traitement (34) comprenant chacune une pluralité de stations de traitement (36), le procédé comprenant les étapes suivantes :
- circulation de la succession de préformes (2) dans la station de chauffage (6) jusqu'à la machine de formage au cours de laquelle chaque préforme (4) est tenue individuellement et chauffée à une température de référence,
- formage de la succession de préformes (4) dans la machine de formage (8), chaque préforme (4) chauffée étant placée dans une station de formage (24) dans laquelle ladite préforme (4) est formée en un récipient (2), de sorte que ladite succession de préformes (4) est formée en une succession de récipients (2) individuels,
- traitement de la succession de récipients (2) individuels dans la machine de traitement (34, 10, 46), chaque récipient (2) individuel étant placé dans une station de traitement (36, 40, 48),
- circulation de chaque récipient tenu individuellement entre la machine de formage et la ou les machines de traitement,
dans lequel le procédé comprend une phase d'identification individuelle de chaque récipient produit durant une période prédéterminée de suivi, phase d'identification individuelle comprenant une étape de marquage au cours de laquelle chaque récipient (2) individuel produit au cours de ladite période de suivi reçoit un marquage propre audit récipient, permettant d'identifier individuellement ledit récipient en le distinguant de tous les autres récipients produit par l'installation de production durant ladite période de suivi ;
dans lequel le marquage propre au récipient à identifier comprend une information de poste relative à au moins l'un des éléments ayant tenu, ou devant tenir ledit récipient à identifier lors de la production du récipient à identifier, et une information d'horodatage (62) relative au moment où ledit récipient (2) à identifier est marqué.

2. Procédé de production selon la revendication 1, dans lequel l'information d'horodatage (62) comprend la date et l'heure (68) à la seconde près auxquelles le marquage (52) du récipient (2) a lieu.

3. Procédé de production selon l'une des revendications précédentes, dans lequel le marquage propre au récipient à identifier comprend en outre un codage propre à l'installation ayant produit ledit récipient et/ou un codage de la période de suivi.

4. Procédé de production selon l'une des revendications précédentes, comprenant une étape d'application d'une couche barrière à la succession de récipients (2), l'une desdites machines de traitement étant une machine d'application (34) de ladite couche barrière sur la paroi interne du récipient (2) comprenant une pluralité de stations d'application (36), chaque récipient (2) étant placé dans une station d'application (36) identifiée dans laquelle une couche barrière est appliquée sur la paroi interne dudit récipient, l'étape de marquage du récipient (2) à identifier comprenant le marquage (52) d'une information (58) relative à la station d'application identifiée dans laquelle une couche barrière a été ou sera appliquée audit récipient.

5. Procédé de production selon la revendication 4, comprenant une autre étape de traitement qui est une étape de remplissage de chaque récipient produit, l'une des machines de traitement correspondante étant une machine de remplissage, l'étape de marquage du récipient à identifier se produisant entre l'étape d'application d'une couche barrière et l'étape de remplissage.

6. Procédé de production selon la revendication précédente, dans lequel l'installation comprenant une unité de bouchage (46) comprend une pluralité de stations de bouchage (48) ; procédé dans lequel, au cours de l'étape de bouchage de la succession de récipients (2), chaque récipient (2) est placé dans une station de bouchage (48) identifiée dans laquelle un bouchon est fixé sur ledit récipient (2), l'étape de marquage du récipient (2) à identifier comprenant le marquage (52) d'une information(60) relative à la station de bouchage (48) identifiée dans laquelle un bouchon a été fixé sur ledit récipient (2).

7. Procédé de production selon la revendication 5 ou 6, dans laquelle l'étape de marquage comprend le marquage (52) d'une information de produit (70) relative au produit de remplissage introduit dans le récipient (2) au cours de l'étape de remplissage.

8. Procédé de production selon l'une quelconque des revendications précédentes, dans lequel l'installation de production comprend une unité d'étiquetage ayant une pluralité de stations d'étiquetage ; procédé dans lequel, au cours de l'étape d'étiquetage, chaque récipient (2) est placé dans une station d'étiquetage identifiée dans laquelle une étiquette est fixée sur ledit récipient, l'étape de marquage du récipient à identifier comprenant le marquage (52) d'une information (58) relative à la station d'étiquetage identifiée dans laquelle une étiquette a été fixée sur ledit récipient.

9. Procédé de production selon l'une quelconque des revendications précédentes, dans laquelle le marquage (52) de chaque récipient (2) est effectué dans une zone unique dudit récipient (2), les informations (54, 58, 56, 60, 62) relatives aux stations identifiées et d'horodatage étant placées les unes adjacentes aux autres dans ladite zone unique.

10. Procédé de commande d'une installation de production d'une succession de récipients (2) à partir d'une succession de préformes (4) en matières plastiques comprenant :
- une première étape d'acquisition de données machine **mettant en œuvre le procédé selon l'une des revendications précédentes,** dans laquelle pour chaque récipient individuel produit, la console de commande mémorise d'une part le marquage propre audit récipient et d'autre part une série de données spécifiques relatives aux stations de formage, et/ou de traitement, et/ou aux éléments ayant tenus ledit récipient au cours de sa production, et/ou une série de données générales relatives au fonctionnement de l'installation lors de la production dudit récipient,
- une deuxième étape d'acquisition de données récipient, au cours de laquelle, on mesure une ou plusieurs grandeurs physiques de chacun des récipients identifié individuellement au cours de la première étape,
- une troisième étape de constitution d'une base de données mixte mettant en correspondance pour chaque récipient identifié individuellement lors de la première étape, d'une part la ou les mesures de la deuxième étape, et la ou les séries de données acquises lors de la première étape.

11. Procédé de commande selon la revendication 10, comprenant une étape de diagnostic, au cours de laquelle on compare les données récipient par rapport à des valeurs cibles préenregistrées correspondants aux grandeurs mesurées, et on détermine un dysfonctionnement avéré ou imminent sur l'une ou plusieurs des stations de formage et/ou de traitement et/ou d'éléments de tenu de l'installation.

12. Procédé de commande selon la revendication 10 ou 11, comprenant une étape d'analyse de la base de données mixte, au cours de laquelle on établit au moins une loi de corrélation entre des données récipient et des données machine, et une étape de correction dans laquelle on calcule d'après la ou les lois de corrélation un ou plusieurs paramètres machine ajustés susceptibles lors d'un prochain cycle de production de produire des récipients dont une ou plusieurs grandeurs physiques seront plus proches de la ou les cibles préenregistrées, que lors de la première étape.

## Patentansprüche

1. Verfahren zur Produktion einer Folge von Behältern (2) ausgehend von einer Folge von erwärmten Vorformlingen (4) aus Kunststoffen in einer Behälterproduktionsanlage (1), die mindestens eine Station zum Erwärmen (6) der Folge von Vorformlingen (4), eine Formmaschine (8) mit einer Mehrzahl von Formstationen (24) und eine oder mehrere Behandlungsmaschinen (34) mit jeweils einer Mehrzahl von Bearbeitungsstationen (36) umfasst, wobei das Verfahren die folgenden Schritte umfasst:
- Zirkulieren der Folge von Vorformlingen (2) in der Erwärmungsstation (6) bis zur Formmaschine, während dessen jeder Vorformling (4) einzeln gehalten und auf eine Referenztemperatur erwärmt wird,
- Formen der Folge von Vorformlingen (4) in der Formmaschine (8), wobei jeder erwärmte Vorformling (4) in einer Formstation (24) angeordnet wird, in welcher der Vorformling (4) zu einem Behälter (2) geformt wird, so dass die Folge von Vorformlingen (4) zu einer Folge von einzelnen Behältern (2) geformt wird,
- Behandeln der Folge von einzelnen Behältern (2) in der Behandlungsmaschine (34, 10, 46), wobei jeder einzelne Behälter (2) in einer Behandlungsstation (36, 40, 48) angeordnet wird,
- Zirkulieren jedes einzeln gehaltenen Behälters zwischen der Formmaschine und der oder den Behandlungsmaschinen,
wobei das Verfahren eine Phase der Einzelidentifizierung jedes produzierten Behälters während eines vorbestimmten Überwachungszeitraums umfasst, wobei die Einzelidentifizierungsphase einen Kennzeichnungsschritt umfasst, während dessen jeder einzelne während des Überwachungszeitraums produzierte Behälter (2) eine behälterspezifische Kennzeichnung erhält, die es ermöglicht, den Behälter einzeln zu identifizieren, indem sie ihn von allen anderen Behältern, die von der Produktionsanlage während des Überwachungszeitraums produziert wurden, unterscheidet;
wobei die spezifische Kennzeichnung des zu identifizierenden Behälters eine Arbeitsplatzinformation bezüglich mindestens eines der Elemente, die den zu identifizierenden Behälter bei der Produktion des zu identifizierenden Behälters gehalten haben oder halten müssen, und eine Zeitstempelinformation (62) bezüglich des Zeitpunkts, zu dem der zu identifizierende Behälter (2) gekennzeichnet wird, umfasst.

2. Produktionsverfahren nach Anspruch 1, bei dem die Zeitstempelinformation (62) das Datum und die sekundengenaue Uhrzeit (68) umfasst, zu denen die Kennzeichnung (52) des Behälters (2) stattfindet.

3. Produktionsverfahren nach einem der vorhergehenden Ansprüche, bei dem die spezifische Kennzeichnung des zu identifizierenden Behälters ferner eine spezifische Codierung der Anlage, die den Behälter produziert hat, und/oder eine Codierung des Überwachungszeitraums umfasst.

4. Produktionsverfahren nach einem der vorhergehenden Ansprüche, umfassend einen Schritt des Aufbringens einer Barriereschicht auf die Folge von Behältern (2), wobei eine der Behandlungsmaschinen eine Aufbringmaschine (34) zum Aufbringen der Barriereschicht auf die Innenwand des Behälters (2) ist, die eine Mehrzahl von Aufbringstationen (36) umfasst, wobei jeder Behälter (2) in einer identifizierten Aufbringstation (36) angeordnet wird, in der eine Barriereschicht auf die Innenwand des Behälters aufgebracht wird, wobei der Kennzeichnungsschritt des zu identifizierenden Behälters (2) die Kennzeichnung (52) einer Information (58) bezüglich der identifizierten Aufbringstation umfasst, in der eine Barriereschicht auf den Behälter aufgebracht wurde oder wird.

5. Produktionsverfahren nach Anspruch 4, das einen weiteren Behandlungsschritt umfasst, der ein Abfüllschritt zum Füllen jedes produzierten Behälters ist, wobei die entsprechende Behandlungsmaschine eine Abfüllmaschine ist, wobei der Kennzeichnungsschritt des zu identifizierenden Behälters zwischen dem Schritt des Aufbringens einer Barriereschicht und dem Abfüllschritt erfolgt.

6. Produktionsverfahren nach dem vorhergehenden Anspruch, bei dem die Anlage eine Verschließeinheit (46) mit einer Mehrzahl von Verschließstationen (48) umfasst, wobei bei dem Verfahren während des Schritts des Verschließens der Folge von Behältern (2) jeder Behälter (2) in einer identifizierten Verschließstation (48) angeordnet wird, in der ein Verschluss am Behälter (2) fixiert wird, wobei der Kennzeichnungsschritt des zu identifizierenden Behälters (2) die Kennzeichnung (52) einer Information (60) bezüglich der identifizierten Verschließstation (48) umfasst, in der ein Verschluss an dem Behälter (2) fixiert wurde.

7. Produktionsverfahren nach Anspruch 5 oder 6, wobei der Kennzeichnungsschritt die Kennzeichnung (52) einer Produktinformation (70) bezüglich des während des Abfüllschritts in den Behälter (2) eingeführten Abfüllprodukts ist.

8. Produktionsverfahren nach einem der vorhergehenden Ansprüche, bei dem die Produktionsanlage eine Etikettierungseinheit mit einer Mehrzahl von Etikettierungsstationen umfasst, wobei bei dem Verfahren während des Etikettierungsschritts jeder Behälter (2) in einer identifizierten Etikettierungsstation angeordnet wird, in der ein Etikett an dem Behälter fixiert wird, wobei der Kennzeichnungsschritt des zu identifizierenden Behälters die Kennzeichnung (52) einer Information (58) bezüglich der identifizierten Etikettierungsstation umfasst, in der ein Etikett an dem Behälter fixiert worden ist.

9. Produktionsverfahren nach einem der vorhergehenden Ansprüche, bei dem die Kennzeichnung (52) jedes Behälters (2) in einem einzigen Bereich des Behälters (2) ausgeführt wird, wobei die Informationen (54, 58, 56, 60, 62) bezüglich der identifizierten Stationen und die Zeitstempelinformationen in dem einzigen Bereich benachbart zueinander angeordnet sind.

10. Steuerungsverfahren für eine Anlage zur Produktion einer Folge von Behältern (2) ausgehend von einer Folge von Vorformlingen (4) aus Kunststoffen, umfassend:
- einen ersten Schritt des Erfassens von Maschinendaten der Maschine, die das Verfahren nach einem der vorhergehenden Ansprüche implementiert, bei dem die Steuerkonsole für jeden einzelnen produzierten Behälter zum einen die spezifische Kennzeichnung des Behälters und zum anderen eine Reihe von speziellen Daten bezüglich der Form- und/oder Behandlungsstationen und/oder der Elemente, die den Behälter während seiner Produktion gehalten haben, und/oder eine Reihe allgemeiner Daten bezüglich des Betriebs der Anlage bei der Produktion des Behälters gespeichert werden,
- einen zweiten Schritt des Erfassens von Behälterdaten, bei dem eine oder mehrere physikalische Größen jedes der im ersten Schritt einzeln identifizierten Behälter gemessen werden,
- einen dritten Schritt des Aufbauens einer kombinierten Datenbank, bei dem für jeden beim ersten Schritt einzeln identifizierten Behälter die Messung(en) des zweiten Schritts einerseits und die im ersten Schritt erfassten Datenreihe(n) andererseits zugeordnet werden.

11. Steuerungsverfahren nach Anspruch 10, das einen Diagnoseschritt umfasst, bei dem die Behälterdaten mit vorab registrierten Zielwerten für die gemessenen Größen verglichen werden und eine nachweisliche oder drohende Funktionsstörung an einer oder mehreren Form- und/oder Behandlungsstationen und/oder Halteelementen der Anlage bestimmt wird.

12. Steuerungsverfahren nach Anspruch 10 oder 11, umfassend einen Schritt des Analysierens der kombinierten Datenbank, bei dem mindestens eine Korrelationsgesetzmäßigkeit zwischen den Behälterdaten und den Maschinendaten aufgestellt wird, und einen Korrelationsschritt, bei dem anhand der Korrelationsgesetzmäßigkeit(en) ein oder mehrere angepasste Maschinenparameter berechnet werden, die geeignet sind, bei einem folgenden Produktionszyklus Behälter zu produzieren, deren eine oder mehrere physikalische Größen den vorab registrierten Zielwerten näher kommen als beim ersten Schritt.

## Claims

1. Method for producing a succession of containers (2) from a succession of preforms (4) made of plastic materials heated in a container production installation (1) comprising at least one heating station (6) for the succession of preforms (4), a forming machine (8) comprising a plurality of forming stations (24), one or more treatment machines (34) each comprising a plurality of treatment stations (36), the method comprising the following steps:
- circulation of the succession of preforms (2) in the heating station (6) to the forming machine during which each preform (4) is held individually and heated to a reference temperature,
- forming of the succession of preforms (4) in the forming machine (8), each heated preform (4) being placed in a forming station (24) in which said preform (4) is formed into a container (2), such that said succession of preforms (4) is formed into a succession of individual containers (2),
- treatment of the succession of individual containers (2) in the treatment machine (34, 10, 46), each individual container (2) being placed in a treatment station (36, 40, 48),
- circulation of each individually held container between the forming machine and the treatment machine or machines,
wherein the method comprises a phase of individual identification of each container produced during a predetermined tracking period, the individual identification phase comprising a marking step during which each individual container (2) produced during said tracking period receives a marking specific to said container, making it possible to individually identify said container by distinguishing it from all the other containers produced by the production installation during said tracking period;
wherein the marking specific to the container to be identified comprises substation information relating to at least one of the elements having held, or having to hold, said container to be identified in the production of the container to be identified, and timestamping information (62) relating to the moment when said container (2) to be identified is marked.

2. Production method according to Claim 1, wherein the timestamping information (62) comprises the date and the time (68) to within the nearest second at which the marking (52) of the container (2) takes place.

3. Production method according to one of the preceding claims, wherein the marking specific to the container to be identified further comprises a coding specific to the installation having produced said container and/or encoding of the tracking period.

4. Production method according to one of the preceding claims, comprising a step of application of a barrier layer to the succession of containers (2), one of said treatment machines being a machine (34) for applying said barrier layer onto the inner wall of the container (2) comprising a plurality of application stations (36), each container (2) being placed in an identified application station (36) in which a barrier layer is applied onto the inner wall of said container, the step of marking of the container (2) to be identified comprising the marking (52) of information (58) relating to the identified application station in which a barrier layer was or will be applied to said container.

5. Production method according to Claim 4, comprising another treatment step which is a step of filling each container produced, one of the corresponding treatment machines being a filling machine, the step of marking of the container to be identified taking place between the step of application of a barrier layer and the filling step.

6. Production method according to the preceding claim, wherein the installation comprising a plugging unit (46) comprises a plurality of plugging stations (48); method in which, during the step of plugging of the succession of containers (2), each container (2) is placed in an identified plugging station (48) in which a plug is fixed onto said container (2), the step of marking of the container (2) to be identified comprising the marking (52) of information (60) relating to the identified plugging station (48) in which a plug was fixed onto said container (2).

7. Production method according to Claim 5 or 6, wherein the marking step comprises the marking (52) of product information (70) relating to the filling product introduced into the container (2) during the filling step.

8. Production method according to any one of the preceding claims, wherein the production installation comprises a labelling unit having a plurality of labelling stations; method in which, during the labelling step, each container (2) is placed in an identified labelling station in which a label is fixed onto said container, the step of marking of the container to be identified comprising the marking (52) of information (58) relating to the identified labelling station in which a label was fixed onto said container.

9. Production method according to any one of the preceding claims, wherein the marking (52) of each container (2) is performed in a zone unique to said container (2), the information (54, 58, 56, 60, 62) relating to the identified stations and the timestamping information being placed adjacent to one another in said unique zone.

10. Method for controlling an installation for producing a succession of containers (2) from a succession of preforms (4) made of plastic materials comprising:
- a first step of acquisition of machine data implementing the method according to one of the preceding claims, wherein, for each individual container produced, the control console memorizes, on the one hand, the marking specific to said container and, on the other hand, a series of specific data relating to the forming and/or treatment stations, and/or to the elements having held said container during its production, and/or a series of general data relating to the operation of the installation during the production of said container,
- a second step of container data acquisition, during which, one or more physical quantities of each of the containers identified individually during the first step is or are measured,
- a third step of construction of a mixed database correlating, for each container individually identified in the first step, on the one hand the measurement or measurements of the second step, and the one or more series of data acquired during the first step.

11. Control method according to Claim 10, comprising a diagnostic step, during which the container data are compared to prestored target values corresponding to the measured quantities, and a proven or imminent malfunction is determined on one or more of the forming and/or treatment stations and/or holding elements of the installation.

12. Control method according to Claim 10 or 11, comprising a step of analysis of the mixed database, during which at least one correlation law is established between container data and machine data, and a correction step in which one or more adjusted machine parameters likely, in a next production cycle, to produce containers in which one or more physical quantities will be closer to the prestored target or targets than in the first step, are calculated according to the correlation law or laws.
